# EUROPÄISCHE PATENTANMELDUNG

(11) **EP 1 034 920 A1**
(43) Veröffentlichungstag der Anmeldung: **13.09.2000**
(21) Anmeldenummer: 99121313.3
(22) Anmeldetag: 26.10.1999
(51) Int. Cl.: B32B 15/04, B32B 7/02, G10K 11/168, F16F 1/40, B60R 13/08

(54) **Schallschutzkapselung**

(30) Priorität: 10.03.1999 DE 19910516
(71) Anmelder: CWW-GERKO Akustik GmbH & Co. KG, 67547 Worms (DE)
(72) Erfinder: Eichhorn, Georg, Dr., 32049 Herford (DE); Finkemeyer, Sven, 33659 Bielefeld (DE)
(74) Vertreter: Schlagwein, Udo, Dipl.-Ing.

(57) **Zusammenfassung**

Eine Schallschutzkapselung (3) zur Abschirmung einer Schallquelle (2) hat ein Gehäuse (4) mit einer innenseitigen Absorptionsschicht (5), beispielsweise einem offenporigen Schaumstoff. Das Gehäuse (4) besteht aus zumindest drei Schichten (6, 7, 8) eines Materials mit hohem Elastizitätsmodul, die durch Dämpfungsschichten (9, 10) miteinander Verbindung haben.

## Beschreibung

Die Erfindung betrifft eine Schallschutzkapselung zur Abschirmung von Schallquellen, welche ein Gehäuse und eine innenseitig daran angebrachte Absorptionsschicht hat.

Schallschutzkapselungen der vorstehenden Art können beispielsweise als über die Schallquelle zu stülpende Schallschutzhaube ausgebildet sein oder auch die Schallquelle vollständig umgeben. Als Schallschutzhauben ausgebildete Schallschutzkapselungen sind beispielsweise zur Verminderung der Schallemission von Kompressoren bekannt und gebräuchlich. Dabei besteht das Gehäuse aus einem schweren Material, beispielsweise Stahlblech und die Absorptionsschicht aus einem offenporigen Schaumstoff. Der Schaumstoff soll den hochfrequenten Luftschall absorbieren während das schwere Material Dröhngeräusche bei niedrigen Frequenzen verhindern soll. Wenn der Anteil niederfrequenter Schwingungen hoch ist, dann muss man das Gehäuse relativ dickwandig ausbilden, damit zur Dämpfung niederfrequenter Schwingungen genügend Masse zur Verfügung steht. Das führt oftmals zu einem unerwünscht hohen Gewicht der Schallschutzkapselung.

Wirkungsvoll bei der Schalldämmung sind Masse-Feder-Systeme, bei denen schallquellenseitig eine frei bewegliche Masse über ein federndes Material mit einem Gehäuse verbunden ist. Solche Schalldämmungen haben jedoch den Nachteil, dass es bei der Resonanzfrequenz zu einem Einbruch in der Schallreduzierung kommt, da dann die Energieaufnahme und -abgabe des schwingenden Systems gleich sind. Ein weiterer Nachteil solcher Feder-Masse-Systeme liegt darin, dass die die Masse bildende Schwerschicht allenfalls eine geringe Entdröhnung aufweist. Weiterhin sind solche Systeme relativ teuer in der Herstellung und eignen sich nicht für grobflächige Kapselungen.

Wie der DE 34 45 759 zu entnehmen ist, sind auch schon aus mehreren Schichten eines schweren Materials gebildete Schallschutzplatten bekannt, bei denen die einzelnen Schichten durch Klebeschichten miteinander verbunden sind, so dass in den Klebeschichten Scherwirkungen auftreten, durch welche Schwingungsenergie in Wärmeenergie umgesetzt wird. Die Schallschutzplatte ist als Bauplatte zum Abschirmen von Gebäuden ausgebildet.

Wie beispielsweise die DE 91 04 672.6 U2 zeigt, ist es ebenfalls bekannt, zum Entdröhnen von Fahrzeugkarosserien ein aus mehreren, jeweils durch eine Dämpfungsschicht miteinander verbundenen, harten Schichten zusammengesetztes Bauteil fest mit der zu entdröhnenden Fahrzeugkarosserie zu verbinden. Ein solches Bauteil ist in der Lage, Körperschall in Wärme umzuwandeln und dadurch eine wirksame Entdröhnung herbeizuführen.

Schallquellen erzeugen oftmals zusätzlich zum emittierten Luftschall Vibrationen, die sich als Körperschall in den Bauteilen ausbreiten, welche mit der Schallquelle Verbindung haben. Dann kann es erforderlich werden, zusätzlich zur Abschirmung der Schallquelle auch die sie tragenden Bauteile zu entdröhnen. Benutzt man zur Abschirmung die im Stand der Technik bekannten, starren Schallschutzkapselungen, dann ist in manchen Fällen damit zu rechnen, dass die Schallschutzkapselungen selbst ins Schwingen geraten und dröhnen oder Körperschall in die sie tragenden Bauteile einleiten, so dass auch bei ihnen ein Entdröhnen erforderlich wird.

Der Erfindung liegt das Problem zugrunde, eine möglichst leicht ausgebildete Schallschutzkapselung der eingangs genannten Art so auszubilden, dass sowohl Luftschall als auch Körperschall möglichst gut absorbiert werden.

Dieses Problem wird erfindungsgemäß dadurch gelöst, dass das Gehäuse aus zumindest drei Schichten eines Materials mit hohem Elastizitätsmodul besteht, die durch Dämpfungsschichten miteinander Verbindung haben.

Eine solche Schallschutzkapselung ist durch die Absorptionsschicht genau wie die bekannte Schallschutzkapselung sehr gut in der Lage, hochfrequente Schwingungen zu absorbieren. Zusätzlich wirken in ihrem Gehäuse jedoch Scherkräfte, durch die in die Schallschutzkapselung gelangender Körperschall und Luftschall, einschließlich niederfrequenter Luftschall, in Wärme umgewandelt wird. Dadurch besteht keine Gefahr, dass die Schallschutzkapselung in ein Dröhnen hervorrufende Schwingungen gelangt. Da gemäß der Erfindung die Schallschutzkapselung aus einem Entdröhnungsmaterial besteht, braucht man die Schallschutzkapselung nicht wie beim Stand der Technik durch ein Entdröhnelement zu entdröhnen. Zusätzlich wirkt die erfindungsgemäße Schallschutzkapselung als Entdröhnungsbauteil für beispielsweise das Blechteil, auf welchem die zu kapselnde Schallquelle angeordnet und auf dem die Schallschutzkapselung befestigt oder das von der Schallschutzkapselung umgeben ist. Gemäß der Erfindung wirkt das Gehäuse als Entdröhnung, welches auch ohne Körperschalleinleitung einen hohen Verlustfaktor hat, so dass die Absorberschicht keine weiteren Funktionen als die Schallabsorption erfüllen muss. Durch die Kombination eines Sandwichmaterials mit einer Absorptionsschicht hat die erfindungsgemäße Schallschutzkapselung also mehrere Funktionen gleichzeitig. Trotz der wesentlich besseren Schallisolation, die mit der erfindungsgemäßen Schallschutzkapselung zu erzielen ist, ergibt sich gegenüber herkömmlichen Schallschutzkapselungen eine wesentliche Gewichtsersparnis. Weiterhin wirkt die erfindungsgemäße Schallschutzkapselung in einem sehr breiten Frequenzspektrum, so dass sie sich auch für Schallquellen mit einer kurz andauernden Schallanregung eignet, beispielsweise für die Abkapselung von elektromagnetisch betätigten Ventilen im Innenraum von Kraftfahrzeugen. Hierzu im Gegensatz ist bei den bisher benutzten Masse-Feder-Systemen stets für einen bestimmten Frequenzbereich mit einem Resonanzeinbruch zu rechnen. Ein weiterer Vorteil der erfindungsgemäßen Schallschutzkapselung liegt darin, dass man durch Verändern der Eigenschaften der Dämpfschichten und der Materialien für die Schichten mit hohem Elastizitätsmodul die Dämpfeigenschaften unterschiedlichen Erfordernissen optimal anpassen kann. Sowohl die Temperatur- als auch die Frequenzabhängigkeit können gleichzeitig verändert werden. Die Mittel zur Veränderung des hochfrequenten Bereiches verändern bei der erfindungsgemäßen Schallschutzkapselung nicht zwangsläufig auch den niedrigfrequenten Bereich.

Schallquellen erzeugen oftmals Wärme. Vielfach sind sie auch in Räumen angeordnet, deren Temperatur starken Schwankungen unterliegt. Kapselt man beispielsweise mit einer Schallschutzkapselung einen kompletten Verbrennungsmotor ab, dann erwärmt sich die Schallschutzkapselung nach dem Starten des Verbrennungsmotors relativ rasch auf Temperaturen von oftmals weit über 100°C. Auch bei in Kraftfahrzeuginnenräumen vorgesehenen Schallschutzkapselungen muss man mit großen Temperaturschwankungen rechnen, nämlich mit Temperaturen unter 0°C morgens beim Starten des Kraftfahrzeugs während der Winterzeit und mit Temperaturen bis etwa 60°C nach einem längeren Stehen des Kraftfahrzeugs in der Sonne. Durch solche Temperaturunterschiede verändert sich das Schubmodul der Dämpfschicht; die Dämpfschicht wird mit zunehmender Temperatur weicher. Dadurch kann die Dämpfwirkung für niederfrequente Schwingungen gänzlich verloren gehen. Den vorgenannten Temperatureinfluss kann man ausschließen, wenn gemäß einer besonders günstigen Weiterbildung der Erfindung die innerste, der Geräusch- und Schwingungsquelle am nächsten liegende Dämpfungsschicht ein höheres Schubmodul hat als die äußerste Dämpfungsschicht. Bei einer solchen Schallschutzkapselung bewirkt die innerste Dämpfungsschicht zunächst nur eine gute Ankopplung an die äußere, weichere Schicht, ohne selbst an der Dämpfung beteiligt zu sein. Die äußere Schicht ist deshalb in der Lage, durch Scherung niederfrequente Schwingungen gut zu dämpfen. Erwärmt sich die Schallschutzkapselung, dann wird die zunächst harte, innenliegende Dämpfungsschicht weicher und sorgt dann für eine Dämpfung niederfrequenter Schwingungen, während die äußere Dämpfungsschicht so weich wird, dass sie aufgrund mangelnder Ankopplung keine Dämpfwirkung mehr hat. Durch die erfindungsgemäße Kombination "harter" und "weicher" Dämpfschichten steht deshalb sowohl bei niedrigen als auch bei hohen Temperaturen zumindest eine Dämpfschicht zur Dämpfung niederfrequenter Schwingungen zur Verfügung. Diese Kombination von Dämpfschichten unterschiedlicher Härte ist auch bei Schallschutzkapselungen und anderen akustisch wirksamen Einrichtungen vorteilhaft, bei denen auf offenporigen Schaumstoff zur Absorption hochfrequenter Schwingungen verzichtet wurde.

Zur Dämpfung von Schallquellen in Kraftfahrzeugen hat es sich als besonders vorteilhaft erwiesen, wenn die Schichten aus Aluminiumblech bestehen, da sich dann bei hoher Wirksamkeit der Schallschutzkapselung ein besonders geringes Gewicht ergibt.

Besonders kostengünstig ist die Schallschutzkapselung herzustellen, wenn die Dämpfungsschichten durch doppelseitig wirkende Klebefolien gebildet sind.

Die Absorptionsschicht kann besonders einfach auch bei gewinkelten Teilen durch Hinterschäumen aufgebracht werden, wenn die Absorptionsschicht ein offenporiger Schaumstoff ist.

Da es bei der erfindungsgemäßen Schallschutzkapselung nicht auf Federeigenschaften der Absorptionsschicht ankommt, kann man diese je nach den bevorzugt zu absorbierenden Frequenzen auswählen und deshalb auch vorsehen, dass die Absorptionsschicht ein Vlies oder Basaltsteinwolle ist.

Die Erfindung lässt verschiedene Ausführungsformen zu. Zur weiteren Verdeutlichung ihres Grundprinzips ist eine davon schematisch in der Zeichnung dargestellt und wird nachfolgend beschrieben. Die Zeichnung zeigt in
- Fig.1: einen Schnitt durch einen Teilbereich einer auf ein Blechteil montierten Schallquelle mit der erfindungsgemäßen Schallschutzkapselung,
- Fig.2: den gemessenen Schallpegel über die Frequenz bei einer Schallschutzkapselung aus Spritzguss und einer erfindungsgemäßen Schallschutzkapselung mit einem Mehrschichtgehäuse, jeweils bei einer starken Schallanregung,
- Fig.3: ein der Figur 2 entsprechendes Diagramm für eine schwache Schallanregung.

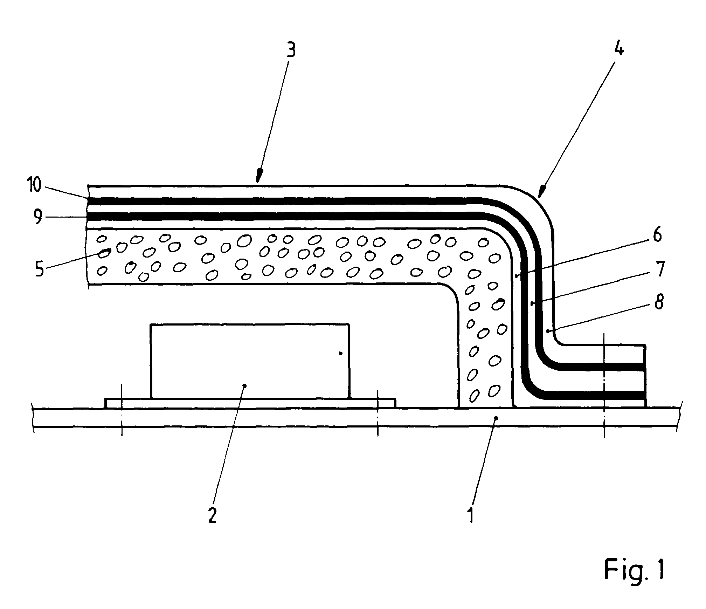

Die Figur 1 zeigt von einem Kraftfahrzeug ein Blechteil 1, auf dem eine Schallquelle 2 befestigt ist. Bei der Schallquelle 2 soll es sich beispielsweise um ein elektromagnetisch betätigtes Ventil handeln, welches bei Betätigung in einem breiten Spektrum Schall emittiert. Teilweise dargestellt ist eine Schallschutzkapselung 3, welche im Wesentlichen aus einem Gehäuse 4 und einer innenseitig daran befestigten Absorptionsschicht 5 besteht, bei der es sich bei diesem Ausführungsbeispiel um einen offenporigen Schaumstoff handelt.

Das Gehäuse 4 besteht aus drei Schichten 6, 7, 8 aus einem Material mit hohem Elastizitätsmodul, vorzugsweise Aluminiumblech, die durch jeweils eine Dämpfungsschicht 9, 10 miteinander verbunden sind. Die Schichten können aus gleichem Material bestehen. Möglich ist es jedoch auch, unterschiedliche Materialien zu verwenden, beispielsweise Stahl und Aluminium. Die der Schallquelle 2 am nächsten liegende Dämpfungsschicht 9 hat einen hohen Schubmodul, ist also bei Raumtemperatur hart, während die äußere Dämpfungsschicht bei Raumtemperatur weich ist und dadurch niederfrequente Schwingungen zu dämpfen vermag. Erwärmt sich die Schallschutzkapselung 3, dann wird die innere Dämpfungsschicht 9 weich, so dass sie dann niederfrequente Schwingungen zu dämpfen vermag, während die äußere Dämpfungsschicht so weich wird, dass sie akustisch wirkungslos wird.

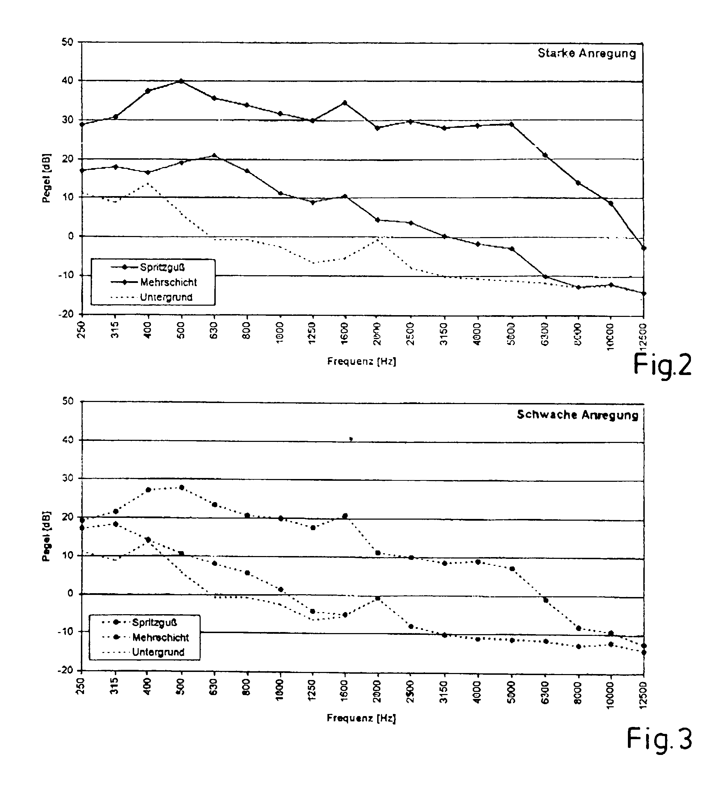

Die Figuren 2 und 3 verdeutlichen, dass der in dB gemessene Schallpegel für eine Schallschutzkapselung nach der Erfindung im Vergleich zu einer Schallschutzkapselung aus Spritzguss sowohl bei starker Anregung als auch bei schwacher Anregung über ein großes Frequenzspektrum wesentlich geringer ist und bei der erfindungsgemäßen Schallschutzkapselung teilweise über 20 Decibel niedriger liegt.

### Bezugszeichenliste

- 1: Blechteil
- 2: Schallquelle
- 3: Schallschutzkapselung
- 4: Gehäuse
- 5: Absorptionsschicht

- 6: Schicht
- 7: Schicht
- 8: Schicht
- 9: Dämpfungsschicht
- 10: Dämpfungsschicht

## Patentansprüche

1. Schallschutzkapselung zur Abschirmung von Schallquellen, welche ein Gehäuse und eine innenseitig daran angebrachte Absorptionsschicht hat, **dadurch gekennzeichnet,** dass das Gehäuse (4) aus zumindest drei Schichten (6, 7, 8) eines Materials mit hohem Elastizitätsmodul besteht, die durch Dämpfungsschichten (9, 10) miteinander Verbindung haben.

2. Schallschutzkapselung nach Anspruch 1, **dadurch gekennzeichnet,** dass die innerste, der Schallquelle (2) am nächsten liegende Dämpfungsschicht (9) ein höheres Schubmodul hat als die äußerste Dämpfungsschicht (10).

3. Schallschutzkapselung nach den Ansprüchen 1 oder 2, **dadurch gekennzeichnet,** dass die Schichten (6, 7, 8) aus Aluminiumblech bestehen.

4. Schallschutzkapselung nach zumindest einem der vorangehenden Ansprüche, **dadurch gekennzeichnet,** dass die Dämpfungsschichten (9, 10) durch doppelseitig wirkende Klebefolien gebildet sind.

5. Schallschutzkapselung nach zumindest einem der vorangehenden Ansprüche, **dadurch gekennzeichnet,** dass die Absorptionsschicht (5) ein offenporiger Schaumstoff ist.

6. Schallschutzkapselung nach zumindest einem der vorangehenden Ansprüche, **dadurch gekennzeichnet,** dass die Absorptionsschicht (5) ein Vlies oder Basaltsteinwwolle ist.
